(19) Europäisches Patentamt
European Patent Office
Office européen des brevets

(11) **EP 3 723 499 B1**

(12) **EUROPÄISCHE PATENTSCHRIFT**

(45) Veröffentlichungstag und Bekanntmachung des Hinweises auf die Patenterteilung:
**01.10.2025 Patentblatt 2025/40**

(21) Anmeldenummer: **17817734.1**

(22) Anmeldetag: **14.12.2017**

(51) Internationale Patentklassifikation (IPC):
*A23L 2/66* (2006.01)  *A23L 29/231* (2016.01)
*A23L 27/00* (2016.01)  *A23L 33/185* (2016.01)

(52) Gemeinsame Patentklassifikation (CPC):
(C-Sets verfügbar)
**A23L 2/66; A23L 27/80; A23L 29/231; A23L 33/185**
(Forts.)

(86) Internationale Anmeldenummer:
**PCT/EP2017/082809**

(87) Internationale Veröffentlichungsnummer:
**WO 2019/114967 (20.06.2019 Gazette 2019/25)**

(54) **PROTEIN-POLYURONID-KONJUGATE UND IHREN VERWENDUNG ALS EMULGATOREN**

PROTEIN-POLYURONIDE CONJUGATES AND USE THEREOF AS EMULSIFIERS

CONJUGUÉS DE PROTÉINE ET DE POLYURONIDE ET LEUR UTILISATION EN TANT QU'ÉMULSIFIANTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**21.10.2020 Patentblatt 2020/43**

(73) Patentinhaber: **Symrise AG**
**37603 Holzminden Niedersachsen (DE)**

(72) Erfinder:
• **HEINERT, Sandra**
**32816 Schieder-Schwalenberg (DE)**
• **WEISSBRODT, Jenny**
**37603 Holzminden (DE)**

• **GROSS, Egon**
**37603 Holzminden (DE)**
• **DRUSCH, Stephan**
**12161 Berlin (DE)**

(74) Vertreter: **Eisenführ Speiser**
**Patentanwälte Rechtsanwälte PartGmbB**
**Postfach 31 02 60**
**80102 München (DE)**

(56) Entgegenhaltungen:
**EP-A1- 1 338 210    WO-A1-2006/132529**
**WO-A1-2008/119482    FR-A1- 2 817 870**
**JP-A- H01 233 300**

(52) Gemeinsame Patentklassifikation (CPC): (Forts.)

C-Sets
**A23L 2/66, A23V 2200/222;**
**A23L 27/80, A23V 2200/222;**
**A23L 29/231, A23V 2200/222**

**Beschreibung**

Die vorliegende Erfindung betrifft Protein-Polyuronid-Konjugate, aufrahmstabile verzehrbare Emulsionen, Getränkesirupe, trinkfertige Getränke, die Verwendung von Protein-Polyuronid-Konjugaten zur Herstellung von Lebensmitteln und kosmetischen oder medizinischen Produkten, die Verwendung von Protein-Polyuronid-Konjugaten als Emulgatoren sowie ein Verfahren zur Herstellung von Protein-Polyuronid-Konjugaten und die mittels des Verfahrens hergestellten Protein-Polyuronid-Konjugate.

Viele Lebensmittel, die ein angenehm cremiges und volles Mundgefühl aufweisen bestehen zum Teil oder vollständig aus einer Emulsion oder befanden sich während des Herstellungsprozesses in einem emulgierten Zustand. Zu diesen Lebensmitteln zählen beispielsweise Erfrischungsgetränke, Milchshakes, Eiscremes, Mayonnaisen, Dressings, Saucen oder Suppen. Bei fertigen Lebensmitteln ist der Verbraucher daran gewöhnt, dass das Lebensmittel stets in einer gleichbleibenden Qualität vorliegt, das heißt, dass das Lebensmittel homogen durchmischt ist, die homogene Mischung eine hohe Stabilität aufweist und dass unterschiedliche Chargen des Lebensmittels nicht nur gleichbleibende sensorische sondern auch gleichbleibende optische Eigenschaften aufweisen. Die Trennung der gemischten Phasen (Aufrahmung) und das damit verbundene Absetzen einer Wasser- oder Ölphase kann dazu führen, dass der Verbraucher das Lebensmittel als minderwertig erachtet. Um die geforderte gleichbleibende Qualität und vor allem Stabilität zu gewährleisten, ist der Einsatz von Emulgatoren in der Lebensmittelindustrie unabdingbar geworden.

Eine Emulsion ist im thermodynamischen Sinne ein instabiles System, das das Bestreben hat, in den energieärmsten Zustand eines 2-Phasen-Systems zurückzukehren. Physikalische Vorgänge, die diese Zerstörung der Emulsion beschreiben, sind Aufrahmung, Sedimentation, Ostwald-Reifung (Ripening), Aggregation und Koaleszenz von Öltröpfchen. Die genannten Vorgänge können dabei zeitlich überlagert ablaufen, wobei üblicherweise die Aufrahmung oder Sedimentation zeitlich vorausgeht.

Von ausreichender physikalischer Stabilität der Emulsion wird gesprochen, wenn innerhalb der geforderten Haltbarkeit des Lebensmittels keine Entmischung des dispersen Systems beobachtbar ist. Liegt ein System mit ungenügender physikalischer Stabilität vor, so wird bei einer - verglichen mit der wässrigen Phase - geringeren Öldichte eine Aufrahmung und Ölringbildung am Flaschenhals beobachtet. Liegt eine höhere Öldichte vor, so wird bei ungenügender physikalischer Stabilität eine Sedimentation am Boden der Flasche beobachtet.

In der Lebensmittelindustrie werden als Emulgatoren beispielsweise Lecithine (E 322), Propylenglycolalginat (E 405) und Mono- und Diglyceride von Speisefettsäuren (E 471) eingesetzt. Emulgatoren in Lebensmitteln werden von Verbrauchern und Verbraucherschützern mehr und mehr kritisiert und es wird vom Verbraucher gefordert, dass Lebensmittel möglichst ohne Emulgatoren oder andere Zusatzstoffe produziert werden oder als Emulgatoren möglichst natürliche Substanzen verwendet werden. So lassen sich Emulgatoren teilweise durch andere Zutaten, wie beispielsweise Senf, Honig oder Eigelb ersetzen. Diese Zutaten enthalten von Natur aus einen gewissen Anteil an Emulgatoren (wie beispielsweise Lecithin in Eigelb oder Senf), sodass ein weiterer Zusatz von Emulgatoren vermieden werden kann. Allerdings weisen diese Zutaten meist einen starken Eigengeschmack auf, der nicht in allen Lebensmitteln erwünscht ist. Zudem ist der Anteil an Emulgatoren relativ gering, sodass nicht immer ausreichend stabile Emulsionen erhalten werden können.

Proteine besitzen ebenfalls grenzflächenaktive Eigenschaften und können aufgrund ihres amphiphilen Charakters und der filmbildenden Eigenschaften als effiziente Emulgatoren in Lebensmittelemulsionen eingesetzt werden. Es hat sich allerdings gezeigt, dass proteinstabilisierte Emulsionen eine geringe Stabilität gegenüber hohen oder tiefen pH-Werten, einer hohen Ionenstärke und erhöhten Temperaturen aufweisen. Bei pH-Werten in der Nähe des isoelektrischen Punktes des Proteins, bei dem die Proteinmoleküle keine Nettoladung mehr tragen, kommt es zur Aggregation und Ausfällung der Proteinmoleküle und damit zum Verlust ihrer stabilisierenden Wirkung. Hohe Temperaturen führen zu einer Denaturierung des Proteins und somit ebenfalls zum Verlust der stabilisierenden Wirkung.

Der Einsatz von Proteinen als Emulgatoren ist somit nur innerhalb von engen pH- und/oder Temperatur-Grenzen möglich, die den möglichen Verarbeitungsprozess und Einsatzbereich des Lebensmittels begrenzen.

Im Rahmen der vorliegenden Erfindung wird als Stand der Technik auf EP 1 338 210 A1, WO 2008/119482 A1, WO 2006/132529 A1, JP H01 233300 A und FR 2 817 870 A1 verwiesen.

Aufgabe der vorliegenden Erfindung war es, einen Emulgator zur Verfügung zu stellen, der eine erhöhte Stabilität gegenüber äußeren Einflüssen, wie pH-Wert und/oder Temperatur, aufweist und dabei vorzugsweise eine ausreichende Geschmacksneutralität aufweist.

Diese Aufgabe wurde gelöst durch ein Protein-Polyuronid-Konjugat, wobei zumindest ein Polyuronid mittels einer kovalenten Bindung an ein Protein gebunden ist und das Protein pflanzlichen Ursprungs ist, dadurch gekennzeichnet, dass das Protein ein Kartoffelprotein oder ein Rapsprotein ist.

Überraschenderweise hat es sich gezeigt, dass die pH- und/oder Temperatur-Bereiche in dem das Protein-Polyuronid-Konjugat stabil ist, wesentlich größer sind als bei Proteinen gleichen Ursprungs, die kein Polyuronid-Konjugat ausgebildet haben. Unter Verwendung des erfindungsgemäßen Protein-Polyuronid-Konjugats als Emulgator hergestellte Emulsionen weisen ebenfalls eine höhere Stabilität gegenüber äußeren Einflüssen auf, sodass die Emulsionen in einem breiteren pH- und/oder Temperatur-Bereich stabil bleiben.

Unter einem Protein pflanzlichen Ursprungs (hier erfindungsgemäß ein Kartoffelprotein oder ein Rapsprotein) wird im Rahmen der vorliegenden Erfindung ein Protein verstanden, d. h. ein biologisches Makromolekül, das aus Aminosäuren durch Peptidbindungen aufgebaut ist, wobei das Protein aus Pflanzen oder Pflanzenteilen (z .B. Samen oder Knollen) gewonnen wird. Bei der Beurteilung, ob ein Protein pflanzlichen Ursprungs ist, wird allein auf den Ursprung des Proteins und auf die primäre Struktur der Proteine abgestellt, d. h. auf die Abfolge der Aminosäuren im Protein, wobei auch Fragmente von Proteinen als Protein verstanden werden, sofern ihre Masse größer als 5 kDa beträgt. Fragmente von Proteinen können beispielsweise bei der Isolation der Proteine entstehen, wenn Proteine trotz schonender Behandlung partiell hydrolysieren und verkürzte Proteine (Hydrolyse von den Enden aus) oder Proteinstücke (Hydrolyse innerhalb der Aminosäurenkette) ausgebildet werden. Es ist allerdings erfindungsgemäß bevorzugt, wenn das Protein pflanzlichen Ursprungs in seiner natürlichen Form vorliegt.

Im Rahmen der vorliegenden Erfindung versteht man unter einem Polyuronid ein Polysaccharid, das eine oder mehrere Uronsäuren, die auch als Ester vorliegen können, als monomere Bausteine enthält.

Eigene Untersuchungen legen nahe, dass bei der Ausbildung von Protein-Polyuronid-Konjugaten eine Reaktion zwischen einer oder mehreren Lysin-Einheiten des Proteins und den einzelnen Saccharid-Einheiten des Polyuronids ausgebildet wird. Es wird davon ausgegangen, dass die primären Aminogruppen des Lysins in einer Maillard-Reaktion mit den freien Hydroxygruppen der Saccharid-Einheiten des Polyuronids reagieren. Allerdings sind auch andere Verknüpfungsreaktionen zwischen Protein und Polyuronid denkbar. Erfindungsgemäß bevorzugt ist allerdings ein Protein-Polyuronid-Konjugat, wobei die kovalente Bindung zwischen einer Lysin-Einheit des Proteins und einer Saccharid-Einheit des Polyuronids ausgebildet ist. Hierbei ist es insbesondere bevorzugt, wenn die kovalente Bindung mittels einer Maillard-Reaktion ausgebildet wurde.

Die Kupplung des Proteins mit dem oder den Polyuroniden mittels Maillard-Reaktion ist besonders bevorzugt, da hierbei keine weiteren Reagenzien während der Herstellung der Protein-Polyuronid-Konjugate eingesetzt werden müssen. Somit kann ein Protein-Polyuronid-Konjugat erhalten werden, das keine unerwünschten Reagenzien enthält bzw. aufwendig aufgereinigt werden muss.

Ein erfindungsgemäßes Protein-Polyuronid-Konjugat ist bevorzugt, bei dem das Polyuronid Uronsäure-Einheiten umfasst und die Carbonsäuregruppen der Uronsäure-Einheiten teilweise oder vollständig verestert sind.

Üblicherweise besitzen sämtliche oder eine überwiegende Anzahl der Wiederholungseinheiten in einem Polyuronid Carbonsäuregruppen. Diese Carbonsäuregruppen sorgen dafür, dass Polyuronide einen sauren Charakter besitzen und die Fähigkeit aufweisen, Wasser einzulagern und/oder Gele auszubilden. Es ist in einer Emulsion allerdings nicht erwünscht, dass sich Gele ausbilden oder dass große Mengen Wasser eingelagert bzw. gebunden werden. Es hat sich in eigenen Untersuchungen gezeigt, dass die Fähigkeit des Protein-Polyuronid-Konjugates Emulsionen auszubilden verbessert werden kann, wenn das Polyuronid des Protein-Polyuronid-Konjugates teilweise oder vollständig verestert vorliegt. Die Veresterung des Polyuronids kann vor oder nach der Ausbildung des Protein-Polyuronid-Konjugates erfolgen, ist allerdings bevorzugt, wenn sie vor der Ausbildung des Protein-Polyuronid-Konjugates durchgeführt wird.

Dabei ist es in einer Ausgestaltung der vorliegenden Erfindung bevorzugt, wenn das Polyuronid einen Veresterungsgrad von größer gleich 50 % aufweist, vorzugsweise einen Veresterungsgrad im Bereich von 60 bis 85 % aufweist, besonders bevorzugt einen Veresterungsgrad im Bereich von 65 bis 70 % aufweist.

Protein-Polyuronid-Konjugate mit einem Veresterungsgrad von größer gleich 50 % weisen einen geringen sauren Charakter auf und sind für die Herstellung von Emulsionen mit geringer Ölpartikelgröße sehr gut geeignet.

In einer alternativen Ausgestaltung der vorliegenden Erfindung ist es bevorzugt, wenn das Polyuronid einen Veresterungsgrad von größer gleich 5 % und kleiner 50 % auf-weist, vorzugsweise einen Veresterungsgrad von größer gleich 25 % und kleiner gleich 48 % aufweist, besonders bevorzugt einen Veresterungsgrad von größer gleich 30 % und kleiner gleich 44 % aufweist.

Protein-Polyuronid-Konjugate mit einem Veresterungsgrad im Bereich von 5 % bis kleiner 50 % zeichnen sich durch eine hohe Stabilität der unter Verwendung des Protein-Polyuronid-Konjugates hergestellten Emulsion aus.

Eigene Untersuchungen haben überraschenderweise gezeigt, dass Protein-Polyuronid-Konjugate, deren Uronsäure-Einheiten einen Veresterungsgrad in den oben näher definierten Bereichen aufweisen, besonders stabile Emulsionen mit geringen Öltröpfchengrößen ausbilden.

Sofern die Carbonsäuregruppen der Uronsäure-Einheiten teilweise oder vollständig verestert sind, ist es erfindungsgemäß bevorzugt, wenn es sich um einen Metyl- oder Ethylester handelt, vorzugsweise um einen Methylester handelt.

Es ist erfindungsgemäß bevorzugt, wenn es sich bei dem Polyuronid des Protein-Polyuronid-Konjugates um eine Alginsäure, Agaropektin oder um ein Pektin handeln. Ein Protein-Polyuronid-Konjugat ist erfindungsgemäß bevorzugt, bei dem das Polyuronid ein Pektin ist.

Es hat sich in eigenen Testreihen gezeigt, dass die Verwendung von Pektin zu besonders vorteilhaften Protein-Polyuronid-Konjugaten führt, die sich durch eine besonders gute Stabilität gegenüber tiefen oder hohen pH-Werten und hohen Temperaturen auszeichnen. Zudem hat es sich gezeigt, dass Emulsionen, die mittels eines Protein-Pektin-Konjugates hergestellt werden, eine besonders hohe Stabilität aufweisen.

Hierbei ist es erfindungsgemäß besonders bevorzugt, wenn das Pektin pflanzlichen Ursprungs ist, vorzugsweise aus Früchten, wie Äpfeln, Quitten, Citrusfrüchten, Aprikosen oder Kirschen, oder Rüben, wie Zuckerrüben, Möhren oder Pastinaken.

Eigene Untersuchungen haben gezeigt, dass insbesondere bei der Verwendung von Kartoffelproteinen oder von Rapsproteinen besonders stabile Protein-Polyuronid-Konjugate erhalten werden. Sowohl Kartoffel- als auch Rapsproteine zeichnen sich durch einen hohen Lysingehalt aus und sind für die Ausbildung von Protein-Polyuronid-Konjugaten besonders vorteilhaft.

Erfindungsgemäß bevorzugt ist ein Protein-Polyuronid-Konjugat, wobei das Protein einen Lysingehalt von mehr als 2 Gew.-% aufweist, vorzugsweise mehr als 4 Gew.-%, besonders bevorzugt mehr als 5 Gew.-% aufweist, bezogen auf die Gesamtmenge aller Aminosäuren des Protein-Polyuronid-Konjugates.

Beispielsweise können aus Kartoffeln Proteine gewonnen werden, die einen Lysingehalt von 6,3 bis 7,9 %, vorzugsweise von 6,8 bis 7,4 % aufweisen, oder es können aus Raps Proteine gewonnen werden, die einen Lysingehalt von 5,0 bis 7,0 %, vorzugsweise von 5,5 bis 6,5 % aufweisen. Es hat sich in eigenen Untersuchungen gezeigt, dass bei der Verwendung von solchen Proteinen besonders vorteilhafte Protein-Polyuronid-Konjugate erhalten werden können. Bei einem zu geringen Lysingehalt ist die Zahl der an das Protein gebundenen Polyuronide möglicherweise zu gering, sodass die hergestellten Protein-Polyuronid-Konjugate zwar eine verbesserte Stabilität aufweisen (verglichen mit dem reinen Protein), aber die Stabilität noch nicht ausreichend hoch ist. Sofern die Zahl der an das Protein gebundenen Polyuronide ausreichend ist, um eine hohe Stabilität zu erreichen, kann die Zahl der verbleibenden freien Aminogruppen des Lysins im Protein-Polyuronid-Konjugat allerdings zu gering sein, sodass die Stabilität von hergestellten Emulsionen zwar verbessert, allerdings nicht ausreichend hoch ist.

Eigene Untersuchungen haben gezeigt, das Protein-Polyuronid-Konjugate besonders gute Emulsionseigenschaften aufweisen, wenn eine ausreichende Zahl an Polyuroniden an das Protein gebunden ist und auch eine ausreichende Zahl an freien Aminogruppen des Lysins erhalten bleibt. Es wird angenommen, dass eine Balance zwischen hydrophoben und hydrophilen Bestandteilen des Protein-Polyuronid-Konjugates eine wichtige Rolle spielt. Während die hydrophoben Proteine sich an den Öltröpfchen festsetzen, ragen die angeknüpften Polysaccharidketten in die wässrige Phase und binden Wassermoleküle um die Öltröpfchen, was zu einer Netzwerkstruktur führt. Die kovalent verbundenen Polyuronide bilden dadurch eine dicke, sterisch stabilisierende Adsorptionsschicht, die die Emulsionsstabilität gegen Alterung, pH- und Temperaturänderungen und ebenso die Resistenz gegenüber Flokkulation verbessert. Die Anzahl der freien primären Aminogruppen hat somit einen Einfluss auf die Emulsionsstabilität.

Erfindungsgemäß bevorzugt ist ein Protein-Polyuronid-Konjugat, wobei der Gehalt an primären Aminogruppen in einer 0,1 Gew.-%igen wässrigen Lösung, bezogen auf den Proteinanteil im Protein-Polyuronid-Konjugat in der Gesamtmenge der wässrigen Lösung, kleiner gleich 20 mg N/L ist, vorzugsweise kleiner gleich 15 mg N/L ist, weiter bevorzugt kleiner gleich 10 mg N/L ist, weiter bevorzugt kleiner gleich 8 mg N/L ist.

Erfindungsgemäß bevorzugt ist ein Protein-Polyuronid-Konjugat, wobei der Gehalt an primären Aminogruppen in einer 0,1 Gew.-%igen wässrigen Lösung, bezogen auf den Proteinanteil im Protein-Polyuronid-Konjugat in der Gesamtmenge der wässrigen Lösung, größer gleich 0,25 mg N/L ist, vorzugsweise größer gleich 0,5 mg N/L ist, weiter bevorzugt größer gleich 1,0 mg N/L ist, weiter bevorzugt größer gleich 1,5 mg N/L ist.

Erfindungsgemäß bevorzugt ist ein Protein-Polyuronid-Konjugat, wobei der Gehalt an primären Aminogruppen in einer 0,1 Gew.-%igen wässrigen Lösung, bezogen auf den Proteinanteil im Protein-Polyuronid-Konjugat in der Gesamtmenge der wässrigen Lösung, im Bereich von 0,25 mg N/L bis 20 mg N/L liegt, vorzugsweise im Bereich von 0,5 mg N/L bis 15 mg N/L liegt, weiter bevorzugt im Bereich von 1,0 mg N/L bis 10 mg N/L liegt, weiter bevorzugt im Bereich von 1,5 mg N/L bis 8 mg N/L liegt.

Zur Herstellung einer 0,1 Gew.-%igen wässrigen Lösung, bezogen auf den Proteinanteil im Protein-Polyuronid- Konjugat in der Gesamtmenge der wässrigen Lösung, wird soviel des Protein-Polyuronid-Konjugats eingewogen, dass der Proteinanteil 0,1 Gew.-% der wässrigen Lösung ausmacht. Sofern der Proteinanteil im Protein-Polyuronid-Konjugat nicht bekannt sein sollte, wird dieser zunächst bestimmt, wobei die Bestimmung mittels Kjeldah-Ische Stickstoffbestimmung erfolgen kann.

Der Gehalt an primären Aminogruppen wird mit einem *Primary Amino Nitrogen Kit* bestimmt. Die Amino- Stickstoffgruppen der freien Aminosäuren in der Probe reagieren mit zugegebenem N-Acetyl-L-Cystein (NAC) und o- Phthaldialdehyd (OPA) zu einem Isoindol-Derivat. Die Anzahl dieser gebildeten Derivate ist stöchometrisch identisch mit der Anzahl an freien primären Aminogruppen. Die Derivate können photometrisch über die Absorption bei 340 nm gemessen werden. Die Methode ist spezifisch für Aminosäuren, die primäre Aminogruppen enthalten.

Ein erfindungsgemäßes Protein-Polyuronid-Konjugat ist bevorzugt, wobei in 80 bis 99 % der Lysin-Einheiten des Proteins keine primäre Aminogruppe vorhanden ist, vorzugsweise in 85 bis 97 %, besonders bevorzugt in 90 bis 95 % der Lysin-Einheiten des Proteins.

Ein erfindungsgemäßes Protein-Polyuronid-Konjugat ist bevorzugt, wobei 80 bis 99 % der Lysin-Einheiten des Proteins kovalent an ein Polyuronid gebunden sind, vorzugsweise 85 bis 97 %, besonders bevorzugt 90 bis 95 % der Lysin-Einheiten des Proteins.

Eigene Untersuchungen haben gezeigt, dass Protein-Polyuronid-Konjugate, in denen sämtliche oder eine zu hohe Anzahl an freien Aminogruppen abreagiert ist bzw. an ein Polyuronid gebunden sind, eine gute Stabilität gegen pH- und Temperaturänderungen aufweisen, allerdings nicht ganz so stabile Emulsionen liefern, wie bei Protein-Polyuronid-Konjugaten, die noch verbleibende primäre Aminogruppen aufweisen.

Erfindungsgemäß besonders bevorzugt ist ein Protein-Polyuronid-Konjugat, wobei zumindest ein Pektin mittels einer kovalenten Bindung an ein Kartoffelprotein gebunden ist, wobei die Carbonsäuregruppen des Pektins teilweise oder vollständig verestert sind und wobei es sich vorzugsweise um einen Metyl- oder Ethylester handelt. Dabei ist es insbesondere bevorzugt, wenn das Protein mit dem oder den Pektinen mittels Maillard-Reaktion verbunden wurde.

Im Rahmen der vorliegenden Erfindung werden vorzugsweise mehrere der vorstehend als bevorzugt bezeichneten Ausgestaltungen des erfindungsgemäßen Protein-Polyuronid-Konjugates gleichzeitig verwirklicht; insbesondere bevorzugt sind die sich aus den beigefügten Ansprüchen ergebenden Kombinationen solcher Ausgestaltungen und der entsprechenden Merkmale.

Ein weiterer Aspekt der vorliegenden Erfindung betrifft eine aufrahmstabile verzehrbare Emulsion, umfassend Wasser, Öl und ein erfindungsgemäßes Protein-Polyuronid-Konjugat.

Erfindungsgemäße Emulsionen zeichnen sich durch eine hohe Stabilität gegen pH- und Temperaturänderungen und eine hohe Lagerstabilität aus.

Die Emulsion ist eine Öl-in-Wasser-Emulsion und besitzt bevorzugt eine Dichte in der dispersen Phase von 0,915 bis 1 g/ml, noch mehr bevorzugt zwischen 0,93 bis 0,98 g/ml. Die Dichte der dispersen Phase wird durch eine entsprechende Wahl der Komponenten der Ölphase eingestellt.

Eine aufrahmstabile verzehrbare Emulsion ist erfindungsgemäß bevorzugt, wobei das Öl in der Wasserphase dispergiert ist mit einem D4,3-Wert der Öl-Partikeldurchmesser von höchstens 20 $\mu$m, vorzugsweise von höchstens 15 $\mu$m, besonders bevorzugt höchstens 10 $\mu$m, ganz besonders bevorzugt von höchstens 5 $\mu$m.

In einer besonders bevorzugten aufrahmstabilen verzehrbaren Emulsion weisen die ÖlPartikel einen D4,3-Wert von höchstens 2 $\mu$m, besonders bevorzugt von höchstens 1 $\mu$m auf. Diese aufrahmstabilen verzehrbaren Emulsion mit sehr kleinen Öl-Partikeln sind besonders für Getränke oder für die Sprühtrocknung geeignet und bevorzugt.

Bei dem D4,3-Wert handelt es sich um den statistischen, volumenbezogenen mittleren Durchmesser der Öltröpfchen, der mittels Laserstrahlbeugung bestimmt wird, wobei eine Dreifachbestimmung durchgeführt wird. Mit dem Wert lassen sich Aussagen zur Stabilität, d. h. Flokkulation und Koaleszenz, der Emulsionen treffen.

Die Tröpfchengröße hat einen entscheidenden Einfluss auf die Stabilität einer Emulsion. Nach dem Gesetz von Stoke kann die Aufrahmgeschwindigkeit durch kleine Öltröpfchen in einer Emulsion reduziert werden. Die Bildung von kleinen Öltröpfchen hängt zum einen vom mechanischen Eintrag bei der Herstellung der Emulsion ab, aber auch von der Fähigkeit eines vorhandenen Emulgators schnell an die Grenzfläche dieser neu gebilde-ten Öltröpfchen zu adsorbieren und diese zu stabilisieren. Je geringer der D4,3-Wert desto höher ist die Stabilität der Emulsionen.

Erfindungsgemäß besonders bevorzugt ist eine aufrahmstabile verzehrbare Emulsion, bestehend aus oder umfassend:

| | |
|---|---|
| Wasser: | 80 - 96,9 Gew.-%, vorzugsweise 80 - 90 Gew.-%, |
| Öl: | 3 - 10 Gew.-%, vorzugsweise 3 - 9 Gew.-%, |
| Protein-Polyuronid-Konjugat: | 0,1 - 10 Gew.-%, vorzugsweise 1 - 10 Gew.-%, |

jeweils bezogen auf die gesamte Emulsion.

Dabei ist eine Stärke insbesondere ein Stärkederivat wie in der EP 0 839 001 beschrieben. In bevorzugten Ausführungsformen der Erfindung umfasst, besteht im Wesentlichen oder besteht Stärke aus Stärkenatriumoctenylsuccinat (E 1450). Ferner wird als Öl vorzugsweise ein Terpen-Öl verwendet. Unter einem Terpen-Öl wird eine nach dem Verständnis eines Lebensmittel-Praktikers nicht wasserlösliche terpenhaltige Flüssigkeit verstanden. Bevorzugt sind dabei erfindungsgemäße Emulsionen, deren Terpen-Öl Citrus-Terpene und/oder Aromaöle umfasst. Bevorzugte Terpen-Öle im Rahmen der vorliegenden Erfindung umfassen oder bestehen aus Orangen-, Zitronen- und/oder Grapefruitöl oder daraus erhältlichen Fraktionen, dabei bevorzugt Limonen (insbesondere d-Limonen) und/oder Orangenöl-Terpene.

Öle pflanzlichen oder tierischen Ursprungs wie beispielsweise Triglyceride können ebenfalls erfindungsgemäß verwendet werden, dabei vorzugsweise geschmacksneutrale Trigylceride mit gleichen oder verschiedenen $C_6$ bis $C_{12}$-Fettsäureresten (MCT, mediumchain trigylceride).

Vorzugsweise besitzt die erfindungsgemäße Emulsion eine spezifische Trübung von zumindest 500 NTU (nephelometric turbidity units). Dabei wird die spezifische Trübung gemessen nach Vorgabe der DIN ISO EN 27027 mit 90° IR-Streulicht, beispielsweise einem Hach 2100N IS Labortrübungsmessgerät mit 860 nm (Infrarot) LED.

Eine erfindungsgemäße Emulsion enthält eine oder mehrere Genusssäuren. Bevorzugte Genusssäuren sind Citronensäure, Weinsäure, Milchsäure, Phosphorsäure und Äpfelsäure. Der pH-Wert der erfindungsgemäßen Emulsionen beträgt vorzugsweise 3 - 4, weiter bevorzugt 3,3 - 3,5.

Ein weiterer Aspekt der vorliegenden Erfindung betrifft ein Verfahren zum Herstellen einer erfindungsgemäßen Emulsion, umfassend das Zusammengeben der Emulsionsbestandteile und Homogenisieren der Emulsionsbestandteile.

Ein weiterer Aspekt der vorliegenden Erfindung betrifft ein Getränkesirup, umfassend eine erfindungsgemäße Emulsion und Wasser.

In erfindungsgemäßen Getränkesirupen ist die Dichtedifferenz zwischen wässriger und Ölphase relativ groß, so beträgt aufgrund des hohen Zuckergehalts die Dichtedifferenz zwischen der dispersen Phase und der wässrigen Phase zumeist 0,12 bis 0,32 kg/l, vorzugsweise 0,14 bis 0,32 g/ml, wodurch an die erfindungsgemäßen Emulsionen besondere Anforderungen gestellt werden, damit die erfindungsgemäßen Getränkesirupen über einen langen Zeitraum aufrahmstabil bleiben.

Der erfindungsgemäße Getränkesirup besitzt dabei vorzugsweise eine spezifische Trübung von mehr als 500 NTU (Nephelometric Turbidity Units). Bevorzugt beträgt die spezifische Trübung 500 - 1200 NTU, besonders bevorzugt 600 - 1000 NTU.

Der erfindungsgemäße Getränkesirup enthält gegebenenfalls zusätzlich einen oder mehrere der folgenden üblichen Zusätze, wie Fruchtbestandteile, im Lebensmittelbereich zugelassene anorganische Säuren, Antioxidantien, Süßungsmittel, Aromen, Farbstoffe, Verdickungsmittel, sogenannte "funktionelle" Zutaten und Konservierungsstoffe.

Als Fruchtbestandteile werden hier vor allem Fruchtaromen, Fruchtsäfte, Fruchtpürees und Fruchtsaftkonzentrate verstanden. Fruchtsäfte bzw. Fruchtsaftkonzentrate, die verwendet werden können, sind solche auf Basis von Zitrusfrüchten, beispielsweise Orange, Zitrone, Grapefruit und Mandarine, und anderen Früchten, beispielsweise Apfel, Birne, Traube, Aprikose und Ananas. Weiterhin können Fruchtsäfte und Fruchtsaftkonzentrate aus Beerenobst, wie Brombeere, Stachelbeere, Johannisbeere, Heidelbeere, Erdbeere und Himbeere verwendet werden. Weiterhin können Fruchtsäfte und Fruchtsaftkonzentrate aus exotischen Früchten, wie beispielsweise Guave, Papaya, Maracuja, Mango und Banane verwendet werden.

Erfindungsgemäß können die Getränkesirupe bis zu 80 Gew.-% der bezeichneten Fruchtbestandteile enthalten. Bevorzugt werden Fruchtsaftkonzentrate eingesetzt, welche 50° - 72 °Brix aufweisen. Regelmäßig werden Fruchtsaftkonzentrate mit etwa 65 °Brix eingesetzt. Bevorzugt sind Fruchtsaftkonzentrate von Orange, Zitrone, Apfel, Birne und Traube.

Weiterhin kann der Getränkesirup Süßungsmittel enthalten. Üblicherweise werden Zucker, Süßstoffe, Zuckeraustauschstoffe und Süßungsmittelzusammensetzungen sowie Mischungen daraus eingesetzt.

Geeignete Zucker sind insbesondere Saccharose, Fructose und Glucose sowie Mischungen davon. Solche Mischungen sind kommerziell z.B. als Invertzuckersirup oder High Fructose Corn Syrup mit einem Trockensubstanzgehalt von in der Regel 65 - 72 °Brixverfügbar.

Geeignete Süßstoffe sind Acesulfam-K, Aspartam, Cyclamat (sowie dessen Na- und Ca-Salze), Neohesperidindihydrochalcon, Sucralose und Saccharin (sowie dessen Na-, K- und Ca-Salze). Pflanzliche Süßstoffe können ebenfalls verwendet werden, wie beispielsweise Glycyrrhicin und Thaumatin. Besonders bevorzugt sind Acesulfam-K, Aspartam, Cyclamat, Na-Cyclamat, Saccharin, Na-Saccharin und Sucralose.

Geeignete Zuckeraustauschstoffe sind Zuckeralkohole wie Isomatitol (E 953), Lactitol (E 966), Maltitol, Manitol (E 421), Sorbitol (E 420), Xylitol (E 967) sowie Gemische daraus. Weiterhin können als Süßungsmittel Mischungen aus synthetischem Süßstoff und entaromatisierten oder nicht entaromatisierten konzentrierten Fruchtzubereitungen verwendet werden.

Die Süßungsmittel werden dem erfindungsgemäßen Getränkesirup in einer solchen Menge zugegeben, dass die erhaltene Süßkraft einem Zusatz bis zu 250 g/l Saccharose entspricht. Bevorzugt werden 180 bis 220 g/l Saccharose.

Der erfindungsgemäße Getränkesirup enthält ebenfalls eine oder mehrere Genusssäuren, vorzugsweise Citronensäure, Weinsäure, Milchsäure, Phosphorsäure und Äpfelsäure. Erfindungsgemäßen Getränkesirupe weisen vorzugsweise einen pH-Wert von kleiner 3 besonders bevorzugt einen pH-Wert von 2 bis 3 auf.

Weiterhin kann der erfindungsgemäße Getränkesirup Hydrokolloide als Verdickungsmittel enthalten. Geeignete Verdickungsmittel sind Carboxymethylcellulose, Xanthan, Johannisbrotkernmehl, Gellan, Guarkemmehl, Carragen, (freie) Alginsäure, (freie) Alginate, (freies) Pektin sowie Mischungen daraus. Werden Verdickungsmittel angewendet, so liegt der Gehalt an genannten Verdickungsmitteln im Getränkesirup dabei zwischen 0,0025 bis 1 Gew.-%. Bevorzugt im Rahmen der vorliegenden Erfindung sind Emulsionen und Getränkesirupe ohne Zusatz von Verdickungsmitteln, d.h. (im Wesentlichen) frei von Hydrokolloiden, wobei nicht verdickend wirksame Menge von Pektin in Einzelfällen in Spuren in den erfindungsgemäßen Getränkesirupen vorhanden sein können, sofern diese ein Fruchtsaftkonzentrat enthalten.

Der erfindungsgemäße Getränkesirup kann weiterhin sogenannte "funktionelle" Zutaten enthalten, wie beispielsweise Vitamine (A, B, C, D, E, K), Mineralstoffe, Kräuterextrakte, Ballaststoffe, prebiotische Zutaten, Aminosäuren, Taurin und/oder Coffein.

Es kann mit Lebensmittelfarbstoffen und/oder färbenden Lebensmitteln eingefärbt werden. Erfindungsgemäß kann der Getränkesirup im Lebensmittelbereich zugelassene Konservierungsstoffe enthalten. Geeignete Konservierungsstoffe sind beispielsweise Sorbinsäure, Benzoesäure und deren Alkalisalze.

Das Konservierungsmittel wird üblicherweise in einer Konzentration von 0,04 bis 0,3 Gew.-% im Getränkesirup angewendet.

Der erfindungsgemäße Getränkesirup kann geeignete natürliche und synthetische Antioxidantien besitzen. Geeignete natürliche Antioxidantien sind beispielsweise Tocopherole, L-Ascorbinsäure, ihre Fettsäureester, wie L-Ascorbylpalmitat, Gallussäureester und Flavonoide. Geeignete synthetische Antioxidantien sind beispielsweise tert.-Butylhydroxyanisol und tert.-Butylhydrochinon.

Erfindungsgemäße Emulsionen mit der oben genannten Partikelverteilung lassen sich mit jeder bekannten, geeigneten Methode herstellen, wie der Hochdruckhomogenisation, Mikrofluidisation oder Emulgierung über Membranen.

Wird ein Hochdruckhomogenisator verwendet, so wird ein zweistufiger Homogenisator bevorzugt, bei dem ein definiertes Druckniveau im Auslauf des Homogenisationsventils eingestellt werden kann. Der verwendete Hauptdruck, das heißt der Druck am Einlauf in das Homogenisationsventil, liegt bei der Herstellung der hier beanspruchten Emulsion zwischen 100 bis 500 bar, vorzugsweise zwischen 160 bis 300 bar. Das Druckniveau im Auslauf wird auf 1/3 bis 1/15 des Hauptdruckes eingestellt, vorzugsweise auf 1/5 bis 1/10.

Die erfindungsgemäßen Emulsionen werden vorzugsweise in 2 bis 6, bevorzugt in 3 bis 4 Durchgängen homogenisiert. Die Temperatur bei der Homogenisation liegt unter 90 °C, vorzugsweise unter 40 °C.

Zur Herstellung der erfindungsgemäßen Getränkesirupe können die konventionell verwendeten Technologien zur Herstellung des fertigen Getränkes verwendet werden. Die Methoden, die zur Herstellung von Getränkesirupen dienen, werden z.B. im Handbuch: Erfrischungsgetränke der Südzucker AG, Mannheim/Ochsenfurt (1998) beschrieben.

Üblicherweise wird bei der Herstellung von safthaltigen Getränkesirupen ein Grundstoff verwendet, der im vorliegenden Fall auch die beanspruchte Emulsion enthalten kann. Er enthält normalerweise alle für den Getränkesirup wichtigen Bestandteile außer Wasser und gegebenenfalls Zucker und/oder Süßungsmittel.

Enthält der Getränkesirup keine Saftanteile oder Zusätze wie Extrakte oder Mineralstoffe, kann der Endhersteller ebenfalls die beanspruchte Emulsion einsetzen, die, je nach Zusammensetzung, die gewünschte Trübung, Farbe sowie den Geschmack des Getränkesirups liefert. Denkbar ist natürlich auch die Herstellung des kompletten Getränkesirups.

Die Viskosität der erfindungsgemäßen Getränkesirupe liegt vorzugsweise, je nach Zusammensetzung und °Brix, im Bereich von 0,004 - 3 Pas, bevorzugt 0,005 - 2 Pas, und kann gegebenenfalls durch bekannte Verdickungsmittel wie oben beschrieben eingestellt werden.

Als Messsystem dient ein Kegel-Platte-System mit einem Durchmesser von 50 mm und einem Kegelwinkel von 2°. Die Schubspannung beträgt 1 s$^{-1}$. Die Temperatur liegt bei 25 °C. Die Viskosität kann z.B. mit dem Rheometer Anton Paar Physica UDS 200 bestimmt werden.

Der erfindungsgemäße Getränkesirup ist für mindestens 6 Monate aufrahmstabil. Aufrahmstabil bedeutet hierbei, dass im Flaschenhals ein Ring mit einer maximalen Ringdicke von 0,5 mm entsteht. Dabei erfolgt die Lagerung bei einer konstanten Temperatur von 20 +/- 1,5° C.

Erfindungsgemäß wird ferner ein Getränkesirup angegeben, umfassend:

- an erfindungsgemäßer Emulsion:    0,5-3 Gew.-%,

- an Wasser:    35-70 Gew.-%

- an Zucker(n):    25-60 Gew.-%

- an Genusssäure(n):    0,5-4 Gew.-%

- an Konservierungsmittel(n):    0,04-0,3 Gew.-%,

jeweils bezogen auf das Gesamtgewicht des Getränkesirups. Dabei verstehen sich die Gewichtsanteile an Wasser, Zucker(n), Genusssäure(n) und Konservierungsmittel(n) als zusätzlich zu den Bestandteilen der erfindungsgemäßen Emulsion. Der erfindungsgemäße Getränkesirup ist überraschenderweise sehr aufrahmstabil und weist eine hohe spezifische Trübung auf. Mit Zucker ist dabei die Summe der Mono- und Disaccharide des Getränkesirups gemeint, insbesondere also ohne Berücksichtigung modifizierter Stärke.

Ein bevorzugter erfindungsgemäßer Getränkesirup umfasst, besteht im Wesentlichen oder besteht aus:

| Komponente | Bereich Gew.-% | Bevorzugt Gew.-% |
|---|---|---|
| Erfindungsgemäße Emulsion | 0,5 - 3 | 0,5 - 3 |
| Wasser | 35 - 70 | 45 - 68 |
| Zucker (Summe aller Zucker, insbesondere Saccharose, Glucose und Fructose) | 25 - 60 | 30 - 52 |
| Süßstoffe (bevorzugt Acesulfam, Saccharin, Cyclamat, Aspartam, Sucralose) | optional, vorzugsweise 0,05 - 1,5 | 0,15 - 1,0, insbesondere bei Sirupen mit < 35 °Brix |
| Genusssäure(n) (bevorzugt Citronensäure) | 0,5 - 4 | 1 - 3 |
| Wasserlösliche Vitamine (bevorzugt B, C) | optional | 0,01 - 0,3 |
| Konservierungsmittel (bevorzugt Na- oder K-Sorbat, Na-benzoat) | 0,04 - 0,3 | 0,06 - 0,12 |

Ein weiterer Aspekt der vorliegenden Erfindung betrifft ein trinkfertiges Getränk, umfassend ein erfindungsgemäßes Protein-Polyuronid-Konjugat und ein verzehrbares Verdünnungsmittel.

Ein weiterer Aspekt der vorliegenden Erfindung betrifft ein trinkfertiges Getränk, umfassend einen erfindungsgemäßen Getränkesirup und ein verzehrbares Verdünnungsmittel.

Ein weiterer Aspekt der vorliegenden Erfindung betrifft eine Verwendung des erfindungsgemäßen Protein-Polyuronid-Konjugats zur Herstellung von Lebensmitteln oder kosmetischen Produkten oder medizinischen Produkten.

Es hat sich in eigenen Untersuchungen gezeigt, dass erfindungsgemäße Protein-Polyuronid-Konjugate nicht nur zur Herstellung von Lebensmitteln, sondern auch zur Herstellung von kosmetischen oder medizinischen Produkten geeignet sind.

Ein weiterer Aspekt der vorliegenden Erfindung betrifft eine Verwendung des erfindungsgemäßen Protein-Polyuronid-Konjugats als Emulgator.

Erfindungsgemäß bevorzugt ist die Verwendung in Getränkeemulsionen oder Sprühtrocknungsemulsionen.

Ein weiterer Aspekt der vorliegenden Erfindung betrifft ein Verfahren zur Herstellung eines Protein-Polyuronid-Konjugats, vorzugsweise eines erfindungsgemäßen Protein-Polyuronid-Konjugates, umfassend die folgenden Schritte:

- Herstellen oder Bereitstellen eines Proteins pflanzlichen Ursprungs (wie hierin als erfindungsgemäß beschrieben)

- Herstellen oder Bereitstellen eines Polyuronids

- Mischen des hergestellten oder bereitgestellten Proteins und des hergestellten oder bereitgestellten Polyuronids, sodass eine Mischung resultiert

- Reagierenlassen der hergestellten Mischung sodass ein Protein-Polyuronid-Konjugat resultiert.

Überraschenderweise hat es sich gezeigt, dass die mit dem erfindungsgemäßen Verfahren hergestellten Protein-Polyuronid-Konjugate in weiten pH- und/oder Temperatur-Bereichen stabil sind. Die für erfindungsgemäße Protein-Polyuronid-Konjugate angegebenen Vorteile gelten für die mittels eines erfindungsgemäßen Verfahrens hergestellten Protein-Polyuronid-Konjugate analog.

Ein erfindungsgemäßes Verfahren ist bevorzugt, wobei das Protein und/oder das Polyuronid als wässrige Lösung hergestellt oder bereitgestellt wird bzw. werden.

Ein erfindungsgemäßes Verfahren ist bevorzugt, wobei das Mischen des hergestellten oder bereitgestellten Proteins und des hergestellten oder bereitgestellten Polyuronids in wässrigem Medium erfolgt.

Ein erfindungsgemäßes Verfahren ist bevorzugt, wobei nach dem Mischen des hergestellten oder bereitgestellten Proteins und des hergestellten oder bereitgestellten Polyuronids die hergestellte Mischung einem Trocknungsschritt unterzogen wird und der Wassergehalt vorzugsweise kleiner gleich 15 Gew.-% ist, bevorzugt kleiner gleich 10 Gew.-% ist, besonders bevorzugt kleiner gleich 7 Gew.-% ist, bezogen auf das Gesamtgewicht der gefriergetrockneten Mischung. Dabei ist es erfindungsgemäß besonders bevorzugt, wenn es sich bei dem Trocknungsschritt um einen Gefrier-, Sprüh-, Walzenband- oder Vakuumbandtrocknungschritt handelt.

Erfindungsgemäß besonders bevorzugt ist es dabei, wenn der Wassergehalt vorzugsweise größer gleich 1 Gew.-% ist, bevorzugt größer gleich 3 Gew.-% ist, besonders bevorzugt größer gleich 5 Gew.-% ist, bezogen auf das Gesamtgewicht der gefriergetrockneten Mischung.

Erfindungsgemäß besonders bevorzugt ist es dabei, wenn der Wassergehalt vorzugsweise größer gleich 1 Gew.-% und kleiner gleich 15 Gew.-% ist, bevorzugt größer gleich 3 Gew.-% und kleiner gleich 10 Gew.-% ist, besonders bevorzugt größer gleich 5 Gew.-% und kleiner gleich 7 Gew.-% ist, bezogen auf das Gesamtgewicht der gefriergetrockneten Mischung.

Ein erfindungsgemäßes Verfahren ist bevorzugt, wobei das Gewichtsverhältnis zwischen Protein und Polyuronid im Bereich zwischen 10 : 1 bis 1 : 10 liegt, vorzugsweise im Bereich zwischen 5 : 1 und 1 : 5 liegt, besonders bevorzugt im Bereich zwischen 2 : 1 und 1 : 2 liegt.

Ein erfindungsgemäßes Verfahren ist bevorzugt, wobei der pH-Wert der Mischung im Bereich zwischen 4 und 8 liegt, vorzugsweise im Bereich von 5 bis 7 liegt.

Ein erfindungsgemäßes Verfahren ist bevorzugt, wobei das Reagierenlassen der Mischung bei einer Temperatur im Bereich von 40 bis 90 °C erfolgt, vorzugsweise bei einer Temperatur von 60 bis 80 °C erfolgt, besonders bevorzugt bei einer Temperatur im Bereich von 65 bis 75 °C erfolgt.

Ein erfindungsgemäßes Verfahren ist bevorzugt, wobei das Reagierenlassen der Mischung bei einer relativen Luftfeuchtigkeit im Bereich von 50 bis 90 % erfolgt, vorzugsweise bei einer relativen Luftfeuchtigkeit von 55 bis 85 % erfolgt, besonders bevorzugt bei einer relativen Luftfeuchtigkeit im Bereich von 65 bis 80 % erfolgt.

Ein erfindungsgemäßes Verfahren ist bevorzugt, wobei der Gehalt an Protein in der Mischung 0,05 bis 5 Gew.-% beträgt, vorzugsweise 0,1 bis 2 Gew.-% beträgt, besonders bevorzugt 0,2 bis 0,7 Gew.-% beträgt.

Ein erfindungsgemäßes Verfahren ist bevorzugt, wobei der Gehalt an Polyuronid in der Mischung 0,2 bis 5 Gew.-% beträgt, vorzugsweise 0,3 bis 2 Gew.-% beträgt, besonders bevorzugt 0,4 bis 1 Gew.-% beträgt.

Im Rahmen der vorliegenden Erfindung werden vorzugsweise mehrere der vorstehend als bevorzugt bezeichneten Ausgestaltungen des erfindungsgemäßen Verfahrens gleichzeitig verwirklicht; insbesondere bevorzugt sind die sich aus den beigefügten Ansprüchen ergebenden Kombinationen solcher Ausgestaltungen und der entsprechenden Merkmale.

Ein weiterer Aspekt der vorliegenden Erfindung betrifft ein Protein-Polyuronid-Konjugat hergestellt mittels eines erfindungsgemäßen Verfahrens.

Im Rahmen der vorliegenden Erfindung werden vorzugsweise mehrere der vorstehend als bevorzugt bezeichneten Aspekte gleichzeitig verwirklicht; insbesondere bevorzugt sind die sich aus den beigefügten Ansprüchen ergebenden Kombinationen solcher Aspekte und der entsprechenden Merkmale.

Die nachfolgenden Beispiele und Vergleichsbeispiele werden die Erfindung weiter verdeutlichen:

Allgemeine Herstellungsmethode zur Herstellung eines Protein-Polyuronid-Konjuqats:

Protein (5 % w/v) und Polyuronid (3 % w/v) werden unabhängig voneinander in Wasser gelöst und der pH-Wert wird mittels verdünntem Natriumhydroxid oder verdünnter Essigsäure auf einen Wert zwischen 5 und 7 (vgl. Tabelle 1) eingestellt. Anschließend wird die hergestellten Dispersionen in einem vorgegebenen Mischungsverhältnis vermengt und 2 Stunden mittels eines Dispersionsrührers gerührt, um einen guten Kontakt der kolloidal gelösten Substanzen zu gewährleisten. Die pH-Werte der Protein-Polyuronid Mischungen werden im Anschluss noch einmal angepasst, sofern eine Abweichung zu dem ursprünglich eingestellten Wert festgestellt wird. Die resultierende Mischung wird anschließend mittels Gefriertrocknung getrocknet. Hierzu werden die Mischungen für 24 h bei -20 °C in Edelstahlschalen eingefroren, bevor sie unter Vakuum bei einem Unterdruck von 1,03 mbar und -20 °C getrocknet werden. Die gefriergetrockneten Proben, deren Trockenmasse zwischen 93 % und 95 % lag, werden anschließend in Plastikbeutel gegeben und von außen mit einem Mörser fein zerkleinert. Zur Bestimmung des Anteils an freien Aminogruppen vor Beginn der Bildung des Konjugats wird eine kleine Menge der Probe entnommen (t=0). Anschließend erfolgt eine hydrothermische Behandlung in einem Klimaschrank, mit dem sich Temperatur und Luftfeuchtigkeit entsprechend kontrolliert einstellen lassen. Nach 24 Stunden wird ein Teil der Reaktionsmischung entnommen und der verbleibende Teil wird für weitere zwei Tage einer weiteren hydrothermische Behandlung bei gleichbleibenden Bedingungen unterzogen. Man erhält somit ein Protein-Polyuronid-Konjugat mit kurzer Reaktionszeit (24 Stunden) und ein Protein-Polyuronid-Konjugat mit langer Reaktionszeit (72 Stunden).

Beispiele:

Unter Verwendung der allgemeinen Herstellungsmethode zur Herstellung eines Protein-Polyuronid-Konjugats wurden 40 unterschiedliche Protein-Polyuronid-Konjugate (je einmal mit kurzer und langer Reaktionszeit) hergestellt. In der nachfolgenden Tabelle 1 sind die verwendeten Proteine, das Polyuronid, der eingestellte pH-Wert, die Anteile an Protein und Polyuronid sowie die Temperatur und Luftfeuchtigkeit während der hydrothermische Behandlung wiedergegeben.

Als Polyuronid wurde ein niederverestertes Pektin mit einem Veresterungsgrad im Bereich von 32 bis 42 % verwendet (in der Tabelle als "niedrig" bezeichnet) oder ein hochverestertes Citruspektin mit einem Veresterungsgrad im Bereich von 68 bis 76 % verwendet (in der Tabelle als "hoch" bezeichnet). Die verwendeten Polyuronide sind unter der Bezeichnungen "Pektin Classic CF 703" und "Pektin Classic CJ 206" kommerziell von der Herbstreith & Fox KG, Turnstraße 37, 75305 Neuenbürg, Deutschland erhältlich.

Als Protein wurde ein Kartoffelproteinisolat (in der Tabelle als "Kartoffel" bezeichnet) verwendet, das unter der Bezeichnung Solanic 300 von der AVEBE U.A., Prins Hendrikplein 20, 9641 GK Veendam, Niederlande erhältlich ist, verwendet oder ein Rapsproteinisolat (in der Tabelle als "Raps" bezeichnet), das unter der Bezeichnung "Teutexx isolex" von der Teutoburger Ölmühle GmbH, Gutenbergstraße 17, 49477 Ibbenbüren, Deutschland erhältlich ist.

Der Anteil des Proteins bzw. Polyuronids ist auf die Gesamtmenge der hergestellten Protein-Polyuronid-Mischung bezogen.

Tabelle 1: Übersicht der in den Beispielen eingestellten Parameter

| Beispielnummer | Proteinquelle | Polyuronid | pH | T [°C] | rH [%] | Anteil Protein [Gew.-%] | Anteil Polyuronid [Gew.-%] |
|---|---|---|---|---|---|---|---|
| 1 | Kartoffel | hoch | 7 | 65 | 79 | 50 | 50 |
| 2 | Kartoffel | niedrig | 6 | 70 | 72 | 50 | 50 |
| 3 | Kartoffel | niedrig | 7 | 60 | 79 | 50 | 50 |
| 4 | Raps | hoch | 5 | 65 | 65 | 25 | 75 |
| 5 | Kartoffel | hoch | 7 | 60 | 79 | 25 | 75 |
| 6 | Raps | niedrig | 7 | 70 | 65 | 25 | 75 |
| 7 | Raps | niedrig | 6 | 70 | 65 | 50 | 50 |
| 8 | Raps | hoch | 6 | 65 | 79 | 37,5 | 62,5 |
| 9 | Raps | hoch | 7 | 70 | 72 | 25 | 75 |
| 10 | Kartoffel | hoch | 6 | 60 | 72 | 37,5 | 62,5 |
| 11 | Kartoffel | niedrig | 5 | 70 | 65 | 25 | 75 |
| 12 | Raps | hoch | 6 | 60 | 72 | 50 | 50 |
| 13 | Kartoffel | hoch | 5 | 70 | 79 | 50 | 50 |
| 14 | Raps | hoch | 7 | 60 | 65 | 25 | 75 |
| 15 | Raps | niedrig | 5 | 65 | 79 | 50 | 50 |
| 16 | Raps | niedrig | 7 | 60 | 65 | 50 | 50 |
| 17 | Kartoffel | hoch | 6 | 60 | 65 | 50 | 50 |
| 18 | Raps | niedrig | 7 | 70 | 79 | 50 | 50 |
| 19 | Kartoffel | niedrig | 7 | 65 | 72 | 50 | 50 |
| 20 | Kartoffel | niedrig | 6 | 65 | 72 | 37,5 | 62,5 |
| 21 | Raps | hoch | 5 | 65 | 72 | 50 | 50 |
| 22 | Kartoffel | niedrig | 5 | 60 | 65 | 50 | 50 |
| 23 | Raps | niedrig | 5 | 70 | 72 | 25 | 75 |
| 24 | Kartoffel | niedrig | 6 | 65 | 72 | 25 | 75 |
| 25 | Kartoffel | hoch | 5 | 65 | 72 | 25 | 75 |
| 26 | Raps | niedrig | 6 | 65 | 65 | 25 | 75 |
| 27 | Kartoffel | niedrig | 5 | 65 | 79 | 37,5 | 62,5 |
| 28 | Raps | niedrig | 7 | 65 | 72 | 37,5 | 62,5 |
| 29 | Kartoffel | hoch | 7 | 70 | 65 | 50 | 50 |
| 30 | Raps | hoch | 7 | 70 | 79 | 50 | 50 |
| 31 | Kartoffel | hoch | 6 | 70 | 72 | 25 | 75 |

(fortgesetzt)

| Beispielnummer | Proteinquelle | Polyuronid | pH | T [°C] | rH [%] | Anteil Protein [Gew.-%] | Anteil Polyuronid [Gew.-%] |
|---|---|---|---|---|---|---|---|
| 32 | Raps | hoch | 6 | 70 | 79 | 25 | 75 |
| 33 | Kartoffel | hoch | 7 | 70 | 65 | 25 | 75 |
| 34 | Raps | niedrig | 7 | 60 | 79 | 25 | 75 |
| 35 | Raps | hoch | 5 | 70 | 65 | 42,5 | 57,5 |
| 36 | Kartoffel | niedrig | 7 | 70 | 79 | 25 | 75 |
| 37 | Raps | hoch | 5 | 60 | 79 | 25 | 75 |
| 38 | Kartoffel | niedrig | 5 | 60 | 79 | 25 | 75 |
| 39 | Raps | niedrig | 5 | 60 | 72 | 35 | 65 |
| 40 | Kartoffel | niedrig | 7 | 60 | 65 | 25 | 75 |

Bestimmung der Stabilität gegenüber pH- und Temperaturänderungen

Zur Bestimmung der Stabilität gegenüber pH- und Temperaturänderungen wurden die in Beispiel 26 und Beispiel 40 hergestellten Protein-Polyuronid-Konjugate verwendet.

Unter Verwendung der Protein-Polyuronid-Konjugate aus den Beispielen 26 und 40 (jeweils die Probem mit langer Reaktionszeit) sowie unter Verwendung von reinen Raps- bzw. Kartoffelproteinen als Vergleichsversuche wurden Emulsionen mit einem Anteil von 0,5 % (w/w) Protein-Polyuronid-Konjugate bzw. Protein hergestellt. Als reines Raps- bzw. Kartoffelprotein wurden die zur Herstellung der Protein-Polyuronid-Konjugate eingesetzten Proteine verwendet.

Die Herstellung der Emulsionen erfolgte mit einem Hochleistungsdispergiergerät bei einer Leistung von 17.000 Umdrehungen pro Minute, während innerhalb einer Minute 20 % (w/w) kommerzielles Pflanzenöltriglycerid aus der Palmfrucht ($\rho$=0,96 kg/m$^3$) zugegeben wurde. Anschließend wurde die Leistung auf 24.000 Umdrehungen pro Minute erhöht und 2 Minuten lang dispergiert.

Von dieser hergestellten Emulsion wurde die Extinktion bei einer Wellenlänge von 550 nm über den Temperaturverlauf von 60 - 90°C gemessen.

Selbst bei Erreichen der Denaturierungstemperatur des Rapsproteins oder Kartoffelproteins ist bei den erfindungsgemäßen Emulsionen keine relevante Erhöhung der Extinkion (entspricht optischen Dichte) erkennbar, während bei den Vergleichsproben eine Erhöhung der Extinktion zu erkennen ist. Die unter Verwendung des reinen Kartoffelproteins hergestellte Emulsion ist bereits bei 60 °C stark ausgeflockt.

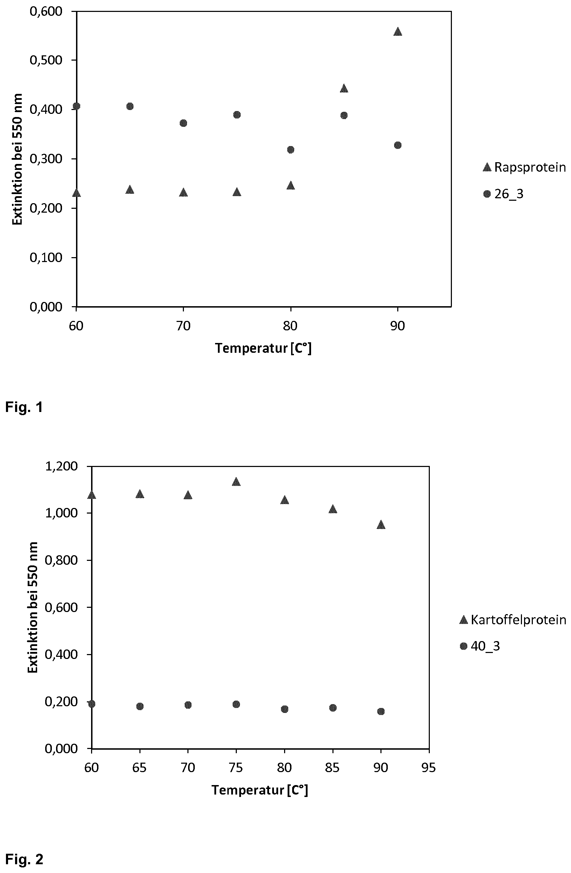

Die Ergebnisse sind in den Figuren 1 und 2 abgebildet. Figur 1 zeigt den Einfluss der Temperatur auf die Extinktion bei den Proben aus Beispiel 26 bzw. reinem Rapsprotein, wobei die Punkte das Protein-Polyuronid-Konjugat mit langer Reaktionszeit (72 Stunden) (als 26_3 bezeichnet) und die Dreiecke das reine Rapsprotein darstellen. Figur 2 zeigt den Einfluss der Temperatur auf die Extinktion bei den Proben aus Beispiel 40 bzw. reinem Kartoffelprotein, wobei die Punkte das Protein-Polyuronid-Konjugat mit langer Reaktionszeit (72 Stunden) (als 40_3 bezeichnet) und die Dreiecke das reine Rapsprotein darstellen.

Zur Beurteilung der pH-Stabilität der Proben wurde der pH von einem Teil der hergestellten Emulsionen auf 5 bzw. 8 mit verdünnter Essigsäure oder verdünntem Natriumhydroxyd angepasst. Anschließend wurde die Tröpfchengröße D4,3 [$\mu$m] zum Zeitpunkt t0 und nach 7 Tagen gemessen.

Im Fall des reinen Rapsproteins konnte festgestellt werden, dass die hergestellten Emulsionen bereits zum Zeitpunkt t0 sehr hohe D4,3-Werte aufwiesen. Dies ist auf die schlechte Emulgatoreigenschaft des Rapsproteins zurückzuführen. Nach Lagerung von sieben Tagen verschlechtert sich der Wert noch weiter. Mit den Protein-Polyuronid-Konjugaten aus Beispiel 26 (mit langer Reaktionszeit) ließen sich Emulsionen mit sehr kleinen Partikelgrößen herstellen, die auch nach 7 Tagen sowohl im sauren als auch im basischen pH stabil geblieben sind. Im basischen Bereich ist sogar eine geringfügige Verkleinerung der Tröpfchengröße zu beobachten.

Im Fall des reinen Kartoffelproteins konnte festgestellt werden, dass die hergestellten Emulsionen zum Zeitpunkt t0 kleine D4,3-Werte aufwiesen. Dies ist auf die gute Emulgatoreigenschaft des Kartoffelproteins zurückzuführen. Nach Lagerung von sieben Tagen bei einem pH von 5 verschlechtert sich der Wert allerdings sehr stark. Dies ist darauf zurückzuführen, dass das Kartoffelprotein bei einem sauren pH von 5 nicht stabil ist. Mit den Protein-Polyuronid-Konjugaten aus Beispiel 40 (mit langer Reaktionszeit) ließen sich Emulsionen mit sehr kleinen Partikelgrößen herstellen, die auch nach 7 Tagen sowohl im sauren als auch im basischen pH stabil geblieben sind.

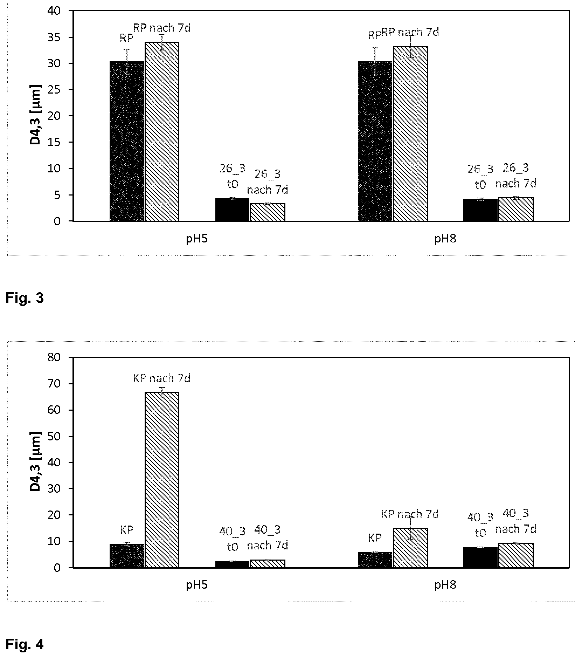

Die Ergebnisse sind in den Figuren 3 und 4 abgebildet. Figur 3 zeigt die D4,3-Werte von reinem Rapsprotein (RP) und Protein-Polyuronid-Konjugaten aus Beispiel 26 mit langer Reaktionszeit (26_3), jeweils bei t0 und nach 7 Tagen Lagerung, wobei der schwarze Balken jeweils den D4,3-Wert bei t0 und der schraffierte Balken nach 7 Tagen darstellen. Figur 4 zeigt den D4,3-Werte von reinem Kartoffelprotein (KP) und Protein-Polyuronid-Konjugaten aus Beispiel 40 mit langer Reaktionszeit (40_3), jeweils bei t0 und nach 7 Tagen Lagerung, wobei der schwarze Balken jeweils den D4,3-Wert bei t0 und der schraffierte Balken nach 7 Tagen darstellen.

Bestimmung der freien Aminogruppen:

Die Anzahl an freien Aminogruppen in den hergestellten Protein-Polyuronid-Konjugaten wurde mit dem *Primary Amino Nitrogen Kit (PAN Assay Kit vom Hersteller Megazyme, Irland)* bestimmt. Die Amino-Stickstoffgruppen der freien Aminosäuren in den Protein-Polyuronid-Konjugaten reagieren mit dem zugegebenen N-Acetyl-L-Cystein (NAC) und o-Phthaldialdehyd (OPA) zu einem Isoindol Derivat. Die Anzahl dieser gebildeten Derivate ist stöchometrisch identisch mit der Anzahl an freiem Amino-Stickstoff. Die Derivate können photometrisch über die Absorption bei 340 nm gemessen werden. Die Methode ist spezifisch für Aminosäuren, die primäre Aminogruppen enthalten.

Die Bestimmung erfolgte an Proben die zu Beginn der Reaktion direkt nach dem Gefriertrocknen entnommen wurden und an den fertig hergestellten Protein-Polyuronid-Konjugaten.

Die zu messende Probe wird zunächst mit Wasser verdünnt und vermischt, sodass in jeder Probenlösung 0,1 % Protein enthalten ist. Hierbei wird nicht auf das Gewicht des Protein-Polyuronid-Konjugats abgestellt, sondern auf das Gewicht des Proteinanteils im Protein-Polyuronid-Konjugat. Daraufhin wird eine NAC Tablette mit 3 ml Wasser und mit 0,05 ml Protein-Polyuronid-Konjugate-Lösung bzw. Wasser für die Blindprobe in einer Küvette verrührt und die Absorption (A1) nach 2 Minuten Reaktionszeit gemessen. Danach wurden 0,1 ml OPA zugegeben, vermischt und die Absorption (A2) nach 15 Minuten Reaktionszeit gemessen. Da o-Phthaldialdehyd (OPA) sehr lichtempfindlich ist, muss die Reaktion unter Lichtausschluss erfolgen. Die Absorptionsdifferenz (A2 - A1) der Blindprobe wird von der Absorptionsdifferenz der Probe subtrahiert. Das Ergebnis ist $\Delta A_{PAN}$. Anschließend kann die Konzentration für PAN *(primary amino nitrogen)* mit der nachfolgenden Formel berechnet werden:

$$c = \frac{V \cdot MW \cdot 1000}{\varepsilon \cdot d \cdot v} \Delta A_{PAN}$$

wobei:

V = Endvolumen [ml]

MW = Molekulares Gewicht von Stickstoff [g/mol]

1000 = Umrechnungsfaktor von g zu mg

$\varepsilon$ = Extinktionskoeffizient eines Isoindol Derivates bei 340 nm = 6803 [l/(mol · cm)]

d = Schichttiefe [cm]

v = Probenvolumen [ml]

ist.

Die Ergebnisse der Untersuchungen sind in der nachfolgenden Tabelle 2 wiedergegeben. Dabei entspricht die als "Beispielsnummer"_0 gekennzeichnete Probennummer, einer Probe die direkt nach dem Vermischen des Proteins mit dem Polyuronid in dem jeweiligen Beispiel entnommen und vermessen wurde. Die als "Beispielsnummer"_1 gekennzeichnete Probennummer entspricht einer Probe die nach 24 Stunden Reaktionszeit des Proteins mit dem Konjugat in dem jeweiligen Beispiel entnommen und vermessen wurde und die als "Beispielsnummer"_3 gekennzeichnete Probennummer entspricht einer Probe die nach 72 Stunden Reaktionszeit des Proteins mit dem Konjugat in dem jeweiligen Beispiel entnommen und vermessen wurde.

| Beispiel | Probennummer | Freie Amino-gruppen [mg N/l] | | Beispiel | Probennummer | Freie Amino-gruppen [mg N/l] |
|---|---|---|---|---|---|---|
| 1 | 1_0 | 44,481 | | 21 | 21_0 | 22,291 |
| | 1_1 | 13,506 | | | 21_1 | 0,342 |
| | 1_3 | 0,835 | | | 21_3 | 0,063 |
| 2 | 2_0 | 36,316 | | 22 | 22_0 | 51,202 |
| | 2_1 | 1,848 | | | 22_1 | 18,383 |
| | 2_3 | 0,949 | | | 22_3 | 3,106 |
| 3 | 3_0 | 35,575 | | 23 | 23_0 | 22,375 |
| | 3_1 | 3,218 | | | 23_1 | 3,688 |
| | 3_3 | 0,052 | | | 23_3 | 0,575 |
| 4 | 4_0 | 30,732 | | 24 | 24_0 | 53,139 |
| | 4_1 | 16,366 | | | 24_1 | 7,658 |
| | 4_3 | 0,535 | | | 24_3 | 2,608 |
| 5 | 5_0 | 32,295 | | 25 | 25_0 | 47,772 |
| | 5_1 | 2,205 | | | 25_1 | 15,013 |
| | 5_3 | 1,115 | | | 25_3 | 4,329 |
| 6 | 6_0 | - | | 26 | 26_0 | 30,810 |
| | 6_1 | 3,313 | | | 26_1 | 5,304 |
| | 6_3 | 0,219 | | | 26_3 | 2,228 |
| 7 | 7_0 | 18,300 | | 27 | 27_0 | 43,582 |
| | 7_1 | 1,750 | | | 27_1 | 7,911 |
| | 7_3 | 0,387 | | | 27_3 | 1,165 |
| 8 | 8_0 | 20,524 | | 28 | 28_0 | 21,608 |
| | 8_1 | 2,451 | | | 28_1 | 2,987 |
| | 8_3 | 0,415 | | | 28_3 | 0,101 |
| 9 | 9_0 | 38,375 | | 29 | 29_0 | 37,425 |
| | 9_1 | 0,837 | | | 29_1 | 0,112 |
| | 9_3 | 0,038 | | | 29_3 | 0,400 |
| 10 | 10_0 | 26,195 | | 30 | 30_0 | 48,725 |
| | 10_1 | 7,940 | | | 30_1 | 4,925 |
| | 10_3 | 3,425 | | | 30_3 | 4,188 |
| 11 | 11_0 | 51,838 | | 31 | 31_0 | 29,625 |
| | 11_1 | 5,375 | | | 31_1 | 1,288 |
| | 11_3 | 1,575 | | | 31_3 | 0,013 |
| 12 | 12_0 | 15,633 | | 32 | 32_0 | 20,600 |
| | 12_1 | 3,165 | | | 32_1 | 2,913 |
| | 12_3 | 0,797 | | | 32_3 | 0,975 |
| 13 | 13_0 | 34,342 | | 33 | 33_0 | 50,231 |
| | 13_1 | 9,456 | | | 33_1 | 0,744 |

(fortgesetzt)

| Beispiel | Probennummer | Freie Amino-gruppen [mg N/l] | Beispiel | Probennummer | Freie Amino-gruppen [mg N/l] |
|---|---|---|---|---|---|
|  | 13_3 | 0,975 |  | 33_3 | 0,026 |
| 14 | 14_0 | 15,526 | 34 | 34_0 | 33,382 |
|  | 14_1 | 13,256 |  | 34_1 | 4,658 |
|  | 14_3 | 2,167 |  | 34_3 | 2,245 |
| 15 | 15_0 | 33,049 | 35 | 35_0 | 27,077 |
|  | 15_1 | 3,866 |  | 35_1 | 1,910 |
|  | 15_3 | 0,744 |  | 35_3 | 1,231 |
| 16 | 16_0 | 12,383 | 36 | 36_0 | 40,449 |
|  | 16_1 | 4,617 |  | 36_1 | 3,167 |
|  | 16_3 | 2,309 |  | 36_3 | 0,359 |
| 17 | 17_0 | 25,489 | 37 | 37_0 | 15,984 |
|  | 17_1 | 6,713 |  | 37_1 | 2,893 |
|  | 17_3 | 4,681 |  | 37_3 | 1,194 |
| 18 | 18_0 | 41,188 | 38 | 38_0 | 14,959 |
|  | 18_1 | 1,175 |  | 38_1 | 4,424 |
|  | 18_3 | 0,287 |  | 38_3 | 0,714 |
| 19 | 19_0 | 37,854 | 39 | 39_0 | 16,555 |
|  | 19_1 | 2,744 |  | 39_1 | 0,869 |
|  | 19_3 | 0,573 |  | 39_3 | 0,182 |
| 20 | 20_0 | 34,305 | 40 | 40_0 | 41,647 |
|  | 20_1 | 2,256 |  | 40_1 | 5,008 |
|  | 20_3 | 0,329 |  | 40_3 | 3,101 |

Beispiel 41: Herstellen einer Getränkeemulsion:

In ein Gefäß mit Rührwerk werden 8,46 g 50 %ige Citronensäure, 4 g 20 % Kaliumsorbatlösung und Konjugat gegeben, sodass ein Protein-Polyuronid-Konjugatgehalt von 0,5 % der Gesamtmenge resultiert. Es wird Wasser zugegeben, bis die Gesamtmenge 1000 g ergibt. Alle erwähnten Komponenten werden unter langsam laufendem Rührwerk vollständig gelöst. Anschließend werden 90 g Pflanzenöltriglycerid unter schnell laufendem Rührwerk zugegeben. Die Rührzeit beträgt 5 min. Die entstandene Emulsion wird mit zwei Durchläufen in einem Hochdruckhomogenisator homogenisiert. Der Druck des 1. Durchlaufes beträgt 300/50 bar. Der Druck des 2. Durchlaufes beträgt 250/50 bar.

Im Anschluss werden die Tröpfchengrößenverteilung der Emulsion gemessen und die Stabilität der Emulsion visuell mittels eines Standtests beurteilt. Zur Bestimmung von Vergleichswerten werden die Emulsionen a) ohne Protein-Polyuronid-Konjugat und b) mit reinem Rapsprotein hergestellt, wobei das Protein-Polyuronid-Konjugat durch das Rapsprotein ersetzt.

Es hat sich gezeigt, dass die unter Verwendung des Protein-Polyuronid-Konjugat hergestellten Getränkeemulsionen die besten Eigenschaften bezüglich der Öltröpfchengröße und der Stabilität der Emulsion aufwiesen. Die unter Verwendung des Rapsproteins hergestellten Getränkeemulsionen wiesen eine geringere Stabilität und eine geringere Öltröpfchengröße auf. Die ohne Protein-Polyuronid-Konjugat hergestellten Getränkeemulsionen neigten zu einer schnellen Aufrahmung.

Beispiel 42: Herstellung einer Sprühemulsion:

In 250g Wasser wird eine Menge Protein-Polyuronid-Konjugat zugegeben, sodass der Protein-Polyuronid-Konjugatgehalt 1% der öligen Bestandteile der Rezeptur, also des Aromas ausmacht. Maltodextrin wird entsprechend der Menge an Protein-Polyuronid-Konjugat zugegeben, sodass die Trockenmasse (Konjugat und Maltodextrin) 40 % der Gesamtmenge ergibt. Alle erwähnten Komponenten werden unter langsam laufendem Rührwerk vollständig gelöst. Anschließend werden 50 g Citronenaroma unter schnell laufendem Rührwerk zugegeben. Die Dispersionszeit beträgt 4 min. Die hergestellte Dispersion wird bei einer Lufteingangstemperatur von 190 °C und einer Ausgangstemperatur von 80 °C sprühgetrocknet.

Im Anschluss werden die Tröpfchengrößenverteilung der Emulsion und des Pulvers gemessen und die Stabilität der Emulsion visuell mittels eines Standtests beurteilt. Zur Bestimmung von Vergleichswerten werden die Emulsionen a) ohne Protein-Polyuronid-Konjugat und b) mit reinem Rapsprotein hergestellt, wobei das Protein-Polyuronid-Konjugat durch das Rapsprotein ersetzt.

Es hat sich gezeigt, dass die unter Verwendung des Protein-Polyuronid-Konjugat hergestellten Sprühemulsionen die besten Eigenschaften bezüglich der Tröpfchengrößenverteilung der Emulsion und des Pulvers und der Stabilität der Emulsion aufwiesen. Die unter Verwendung des Rapsproteins hergestellten Sprühemulsionen wiesen eine geringere Stabilität und eine geringere Tröpfchengrößenverteilung auf. Die ohne Protein-Polyuronid-Konjugat hergestellten Getränkeemulsionen neigten zu einer schnellen Aufrahmung.

**Patentansprüche**

1. Protein-Polyuronid-Konjugat, **dadurch gekennzeichnet, dass** zumindest ein Polyuronid mittels einer kovalenten Bindung an ein Protein gebunden ist und das Protein pflanzlichen Ursprungs ist, weiter **dadurch gekennzeichnet, dass** das Protein ein Kartoffelprotein oder ein Rapsprotein ist.

2. Protein-Polyuronid-Konjugat nach Anspruch 1, **dadurch gekennzeichnet, dass** das Polyuronid Uronsäure-Einheiten umfasst und die Carbonsäuregruppen der Uronsäure-Einheiten teilweise oder vollständig verestert sind.

3. Protein-Polyuronid-Konjugat nach Anspruch 2, **dadurch gekennzeichnet, dass** es sich um einen Metyl- oder Ethylester handelt, vorzugsweise um einen Methylester handelt.

4. Protein-Polyuronid-Konjugat nach einem der vorherigen Ansprüche, **dadurch gekennzeichnet, dass** das Polyuronid ein Pektin ist.

5. Protein-Polyuronid-Konjugat nach einem der vorherigen Ansprüche, wobei der Gehalt an primären Aminogruppen in einer 0,1 Gew.-%igen, bezogen auf den Proteinanteil des Protein-Polyuronid-Konjugats, wässrigen Lösung im Bereich von 0,25 mg N/L bis 20 mg N/L liegt, vorzugsweise im Bereich von 0,5 mg N/L bis 15 mg N/L liegt, weiter bevorzugt im Bereich von 1,0 mg N/L bis 10 mg N/L liegt, weiter bevorzugt im Bereich von 1,5 mg N/L bis 8 mg N/L liegt.

6. Protein-Polyuronid-Konjugat nach Anspruch 1, **dadurch gekennzeichnet, dass** das Polyuronid Uronsäure-Einheiten umfasst und die Carbonsäuregruppen der Uronsäure-Einheiten teilweise oder vollständig verestert sind, wobei das Polyuronid ein Pektin ist.

7. Aufrahmstabile verzehrbare Emulsion, umfassend Wasser, Öl und ein Protein-Polyuronid-Konjugat nach einem der Ansprüche 1 bis 6.

8. Getränkesirup, umfassend eine Emulsion nach Anspruch 7 und Wasser.

9. Trinkfertiges Getränk, umfassend einen Getränkesirup nach Anspruch 8 und ein verzehrbares Verdünnungsmittel.

10. Verwendung des Protein-Polyuronid-Konjugats nach einem der Ansprüche 1 bis 6 als Emulgator, vorzugsweise zur Herstellung von Lebensmitteln oder kosmetischen Produkten oder medizinischen Produkten.

11. Verfahren zur Herstellung eines Protein-Polyuronid-Konjugats, vorzugsweise eines Protein-Polyuronid-Konjugates nach einem der Ansprüche 1 bis 6, umfassend die folgenden Schritte

    - Herstellen oder Bereitstellen eines Proteins pflanzlichen Ursprungs, wobei das Protein ein Kartoffelprotein oder ein Rapsprotein ist,
    - Herstellen oder Bereitstellen eines Polyuronids
    - Mischen des hergestellten oder bereitgestellten Proteins und des hergestellten oder bereitgestellten Polyuronids, sodass eine Mischung resultiert

- Reagierenlassen der hergestellten Mischung sodass ein Protein-Polyuronid-Konjugat resultiert.

12. Verfahren nach Anspruch 11, wobei das Protein und/oder das Polyuronid als wässrige Lösung hergestellt oder bereitgestellt wird bzw. werden.

13. Verfahren nach einem der Ansprüche 11 oder 12, wobei nach dem Mischen des hergestellten oder bereitgestellten Proteins und des hergestellten oder bereitgestellten Polyuronids die hergestellte Mischung einem Trockungschritt unterzogen wird und der Wassergehalt vorzugsweise kleiner gleich 15 Gew.-% ist, bevorzugt kleiner gleich 10 Gew.-% ist, besonders bevorzugt kleiner gleich 7 Gew.-% ist, bezogen auf das Gesamtgewicht der gefriergetrockneten Mischung.

14. Verfahren nach einem der Ansprüche 11 bis 13, wobei das Gewichtsverhältnis zwischen Protein und Polyuronid im Bereich zwischen 10 : 1 bis 1 : 10 liegt, vorzugsweise im Bereich zwischen 5 : 1 und 1 : 5 liegt, besonders bevorzugt im Bereich zwischen 2 : 1 und 1 : 2 liegt.

## Claims

1. Protein-polyuronide conjugate, **characterized in that** at least one polyuronide is bound via a covalent bond to a protein and the protein is of plant origin, further **characterized in that** the protein is a potato protein or a rapeseed protein.

2. Protein-polyuronide conjugate according to claim 1, **characterized in that** the polyuronide comprises uranic acid units and the carboxylic acid groups of the uranic acid units are partially or completely esterified.

3. Protein-polyuronide conjugate according to claim 2, **characterized in that** it is a methyl or ethyl ester, preferably a methyl ester.

4. Protein-polyuronide conjugate according to any of the preceding claims, **characterized in that** the polyuronide is a pectin.

5. Protein-polyuronide conjugate according any of the preceding claims, wherein the content of primary amino groups in a 0.1 wt.% aqueous solution, based on the protein content of the protein-polyuronide conjugate, is in the range of 0.25 mg N/L to 20 mg N/L, preferably in the range from 0.5 mg N/L to 15 mg N/L, more preferably in the range from 1.0 mg N/L to 10 mg N/L, more preferably in the range from 1.5 mg N/L to 8 mg N/L.

6. Protein-polyuronide conjugate according to claim 1, **characterized in that** the polyuronide comprises uric acid units and the carboxylic acid groups of the uric acid units are partially or completely esterified, wherein the polyuronide is a pectin.

7. Creaming-stable edible emulsion comprising water, oil, and a protein-polyuronide conjugate according to any of claims 1 to 6.

8. Beverage syrup comprising an emulsion according to claim 7 and water.

9. Ready-to-drink beverage comprising a beverage syrup according to claim 8 and an edible diluting agent.

10. Use of the protein-polyuronide conjugate according to any of claims 1 to 6 as an emulsifier, preferably for the production of foodstuffs or cosmetic products or medical products.

11. Process for the production of a protein-polyuronide conjugate, preferably a protein-polyuronide conjugate according to any of claims 1 to 6, comprising the following steps

- producing or providing a protein of plant origin, wherein the protein is a potato protein or a rapeseed protein,
- producing or providing a polyuronide
- mixing the produced or provided protein and the produced or provided polyuronide so that a mixture results
- allowing the produced mixture to react so that a protein-polyuronide conjugate results.

12. Method according to claim 11, wherein the protein and/or the polyuronide is or are produced or provided as an aqueous solution.

13. Method according to any of claim 11 or 12, wherein after mixing the produced or provided protein and the produced or provided polyuronide, the produced mixture is subjected to a drying step and the water content is preferably less than or equal to 15 wt.%, more preferably less than or equal to 10 wt.%, even more preferably less than or equal to 7 wt.%, based on the total weight of the freeze-dried mixture.

14. Method according to any of claims 11 to 13, wherein the weight ratio between protein and polyuronide is in the range between 10:1 and 1:10, preferably in the range between 5:1 and 1:5, even more preferably in the range between 2:1 and 1:2.

**Revendications**

1. Conjugué protéine-polyuronide, **caractérisé par le fait qu'**au moins un polyuronide est lié à une protéine par une liaison covalente et que la protéine est d'origine végétale, **caractérisé en outre par le fait que** la protéine est une protéine de pomme de terre ou une protéine de colza.

2. Conjugué protéine-polyuronide selon la revendication 1, **caractérisé par le fait que** le polyuronide comprend des unités d'acide uronique, et que les groupes d'acide carboxylique des unités d'acide uronique sont partiellement ou totalement estérifiés.

3. Conjugué protéine-polyuronide selon la revendication 2, **caractérisé par le fait qu'**il s'agit d'un ester méthylique ou éthylique, de préférence d'un ester méthylique.

4. Conjugué protéine-polyuronide selon l'une quelconque des revendications précédentes, **caractérisé par le fait que** le polyuronide est une pectine.

5. Conjugué protéine-polyuronide selon l'une quelconque des revendications précédentes, dans lequel la teneur en groupes amino primaires dans une solution aqueuse à 0,1 % en poids, par rapport à la teneur en protéines du conjugué protéine-polyuronide, se situe dans la plage allant de 0,25 mg N/L à 20 mg N/L, de préférence dans la plage allant de 0,5 mg N/L à 15 mg N/L, en outre de préférence dans la plage allant de 1,0 mg N/L à 10 mg N/L, en outre de préférence dans la plage allant de 1,5 mg N/L à 8 mg N/L.

6. Conjugué protéine-polyuronide selon la revendication 1, **caractérisé par le fait que** le polyuronide comprend des unités d'acide uronique, et que les groupes d'acide carboxylique des unités d'acide uronique sont partiellement ou totalement estérifiés, dans lequel le polyuronide est une pectine.

7. Émulsion comestible, stable au crémage, comprenant de l'eau, de l'huile et un conjugué protéine-polyuronide selon l'une quelconque des revendications 1 à 6.

8. Sirop pour boisson comprenant une émulsion selon la revendication 7 et de l'eau.

9. Boisson prête à boire, comprenant un sirop pour boisson selon la revendication 8 et un diluant comestible.

10. Utilisation du conjugué protéine-polyuronide selon l'une quelconque des revendications 1 à 6 comme émulsifiant, de préférence pour la production de produits alimentaires ou de produits cosmétiques ou de produits médicaux.

11. Procédé de production d'un conjugué protéine-polyuronide, de préférence d'un conjugué protéine-polyuronide selon l'une quelconque des revendications 1 à 6, comprenant les étapes suivantes consistant à:

- produire ou fournir une protéine d'origine végétale, dans lequel la protéine est une protéine de pomme de terre ou une protéine de colza,
- produire ou fournir un polyuronide,
- mélanger la protéine produite ou fournie et le polyuronide produit ou fourni de sorte qu'il en résulte un mélange,
- faire réagir le mélange produit de sorte qu'il en résulte un conjugué protéine-polyuronide.

12. Procédé selon la revendication 11, dans lequel la protéine et/ou le polyuronide est ou bien sont produit(s) ou fourni(s) en tant que solution aqueuse.

13. Procédé selon l'une quelconque des revendications 11 ou 12, dans lequel, après avoir mélangé la protéine produite ou fournie et le polyuronide produit ou fourni, le mélange produit est soumis à une étape de séchage, et la teneur en eau est de préférence inférieure ou égale à 15 % en poids, de préférence inférieure ou égale à 10 % en poids, de manière particulièrement préférée inférieure ou égale à 7 % en poids, par rapport au poids total du mélange lyophilisé.

14. Procédé selon l'une quelconque des revendications 11 à 13, dans lequel le rapport pondéral entre la protéine et le polyuronide se situe dans la plage allant de 10 : 1 à 1 : 10, de préférence dans la plage allant de 5 : 1 à 1 : 5, de manière particulièrement préférée dans la plage allant de 2 : 1 à 1 : 2.

**Fig. 1**

**Fig. 2**

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1338210 A1
- WO 2008119482 A1
- WO 2006132529 A1
- JP H01233300 A
- FR 2817870 A1
- EP 0839001 A

**In der Beschreibung aufgeführte Nicht-Patentliteratur**

- Handbuch: Erfrischungsgetränke der Südzucker AG. 1998